(19) Europäisches Patentamt
European Patent Office
Office européen des brevets

(11) **EP 4 699 880 A1**

(12) **EUROPEAN PATENT APPLICATION**
published in accordance with Art. 153(4) EPC

(43) Date of publication:
**25.02.2026 Bulletin 2026/09**

(21) Application number: **24795691.5**

(22) Date of filing: **18.03.2024**

(51) International Patent Classification (IPC):
**B60W 30/02** $^{(2012.01)}$   **B60W 40/107** $^{(2012.01)}$
**B60W 40/11** $^{(2012.01)}$   **B60W 40/112** $^{(2012.01)}$

(52) Cooperative Patent Classification (CPC):
**B60W 10/04; B60W 10/18; B60W 10/22;
B60W 30/02; B60W 30/04; B60W 40/00;
B60W 40/107; B60W 40/11; B60W 40/112**

(86) International application number:
**PCT/CN2024/082190**

(87) International publication number:
**WO 2024/222308 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.04.2023 CN 202310483290**

(71) Applicant: **BYD Company Limited
Shenzhen, Guangdong 518118 (CN)**

(72) Inventors:
• **WANG, Yanping
Shenzhen, Guangdong 518118 (CN)**

• **LIAO, Hong
Shenzhen, Guangdong 518118 (CN)**
• **LV, Haijun
Shenzhen, Guangdong 518118 (CN)**
• **HU, Zhiming
Shenzhen, Guangdong 518118 (CN)**
• **LIAO, Yinsheng
Shenzhen, Guangdong 518118 (CN)**

(74) Representative: **Aldridge, Henry Alexander et al
Venner Shipley LLP
200 Aldersgate
London EC1A 4HD (GB)**

(54) **VEHICLE CONTROL METHOD AND APPARATUS, AND VEHICLE**

(57) A vehicle and a vehicle control method. The vehicle comprises a vehicle control apparatus. The vehicle control method comprises: acquiring vehicle state information; determining a target moment compensation control strategy according to the vehicle state information, wherein the target moment compensation control strategy comprises one of or a combination of two of a drive system yaw moment compensation control strategy, a braking system yaw moment compensation control strategy and an active suspension roll compensation control strategy; and performing moment compensation on a vehicle according to the target moment compensation control strategy.

```
┌──────────────────────────────────┐
│  Obtain vehicle status information │── S1
└──────────────────────────────────┘
                 │
                 ▼
┌─────────────────────────────────────────────┐
│ Determine a target torque compensation control │
│ strategy according to vehicle state information, │
│ where the target torque compensation control     │── S2
│ strategy includes one or both of a drive system  │
│ yaw moment compensation control strategy, a brake │
│ system yaw moment compensation control strategy   │
│ and an active suspension roll compensation        │
│ control strategy                                  │
└─────────────────────────────────────────────┘
                 │
                 ▼
┌─────────────────────────────────────────────┐
│ Perform torque compensation on the vehicle      │
│ according to the target torque compensation     │── S3
│ control strategy                                │
└─────────────────────────────────────────────┘
```

FIG. 1

**Description**

## CROSS-REFERENCE TO RELATED APPLICATIONS

The present disclosure claims priority to Chinese Patent Application No. 202310483290.9 filed on April 28, 2023, titled "VEHICLE CONTROL METHOD AND APPARATUS, AND VEHICLE", which is incorporated herein by reference in its entirety.

## FIELD

The present disclosure relates to the field of vehicle technologies, and in particular, to a vehicle control method and apparatus, and a vehicle

## BACKGROUND

At present, the control of vehicle motion is mostly based on the six degrees of freedom of the vehicle, regardless of the scenario causing the dynamic changes of the vehicle, a single execution system is configured to complete the yaw or roll control. However, vehicle motion is extremely complex, for instance, when the vehicle turns, it will also produce yaw and roll motions, when the vehicle brakes, it will also produce pitch or roll motion depending on the road conditions. Therefore, in terms of vehicle motion control, the current control method has limited effect on improving vehicle motion performance and requires further improvement.

## SUMMARY

The present application is intended to resolve at least one of the technical problems in the related art. Therefore, the first purpose of the present application is to propose a vehicle control method, which can effectively adjust the dynamic motion posture of the vehicle and improve the vehicle motion effect.
The second purpose of the present application is to provide a vehicle control device.
The third purpose of the present application is to provide a vehicle.
In order to achieve the above-mentioned purposes, the vehicle control method of the first aspect embodiment of the present application includes: obtaining vehicle status information; determining a target torque compensation control strategy based on the vehicle status information, where the target torque compensation control strategy includes one or both of a drive system yaw moment compensation control strategy, a braking system yaw moment compensation control strategy and an active suspension roll compensation control strategy; and performing torque compensation on the vehicle according to the target torque compensation control strategy.
According to the vehicle control method of an embodiment of the present application, the corresponding target torque compensation control strategy is determined according to the vehicle state information, the target torque compensation control strategy can integrate the control of the two systems to achieve the vector force fusion control of the vehicle's yaw characteristics and roll characteristics, or adopt an effective compensation control strategy specifically tailored to the specific situation of the vehicle state information, which can optimize the vehicle's operating posture, improve the control effect in certain vehicle dynamic change scenarios, improve control efficiency, and enhance the driving experience for users.
In some embodiments, the vehicle state information includes a steering wheel angle value and a vehicle lateral acceleration value, and determining the target torque compensation control strategy based on the vehicle state information includes: obtaining a vehicle roll angle value based on the vehicle lateral acceleration value and a first vehicle intrinsic parameter; and determining the target torque compensation control strategy based on the vehicle roll angle value and the steering wheel angle value.
In some embodiments, the target torque compensation control strategy is determined according to the vehicle roll angle value and the steering wheel angle value, including: if the steering wheel angle value is greater than or equal to a preset steering wheel angle threshold and the vehicle roll angle value is greater than or equal to a preset roll angle threshold, and a torque request signal is detected, then the target torque compensation control strategy is a combination of the drive system yaw moment compensation control strategy and the active suspension roll compensation control strategy; if the steering wheel angle value is greater than or equal to the preset steering wheel angle threshold and the vehicle roll angle value is greater than or equal to the preset roll angle threshold, and a braking signal is detected, then the target torque compensation control strategy is a combination of the braking system yaw moment compensation control strategy and the active suspension roll compensation control strategy.
In some embodiments, the vehicle control method of the first aspect of the present application includes: obtaining vehicle status information; identifying the dynamic change scenario of the vehicle based on the vehicle status information;

determining a target torque compensation control strategy based on the dynamic change scenario, where the target torque compensation control strategy includes one or a both of the drive system yaw moment compensation control strategy, the braking system yaw moment compensation control strategy and the active suspension roll compensation control strategy; and performing torque compensation on the vehicle according to the target torque compensation control strategy.

According to the vehicle control method of the embodiment of the present application, the dynamic change scenario of the vehicle is identified according to the vehicle state information, and the corresponding target torque compensation control strategy is adopted considering the dynamic change scenario of the vehicle. The target torque compensation control strategy can integrate the control of the two systems to achieve the vector force fusion control of the vehicle's yaw characteristic and roll characteristic, or adopt an effective compensation control strategy specifically tailored to the specific situation of the vehicle's current dynamic change, which can optimize the vehicle's operating posture, improve the control effect in certain vehicle dynamic change scenarios, improve the control efficiency, and enhance the driving experience for users.

In some embodiments, the vehicle status information includes a steering wheel angle value and a vehicle lateral acceleration value; identifying the dynamic change scenario of the vehicle based on the vehicle status information includes: obtaining a vehicle roll angle value based on the vehicle lateral acceleration value and a first vehicle intrinsic parameter; and determining the dynamic change scenario of the vehicle based on the vehicle roll angle value and the steering wheel angle value.

In some embodiments, the dynamic change scenario of the vehicle is determined based on the vehicle roll angle value and the steering wheel angle value, including: if the steering wheel angle value is greater than or equal to a preset steering wheel angle threshold and the vehicle roll angle value is greater than or equal to a preset roll angle threshold, then the dynamic change scenario of the vehicle is determined to be a first scenario; the first scenario is the dynamic change of the vehicle caused by the superposition of the steering wheel angle input and the vehicle's external environment.

In some embodiments, the target torque compensation control strategy is determined according to the dynamic change scenario, including: determining that the dynamically changing scenario is the first scenario; if a torque request signal is detected, the target torque compensation control strategy is a combination of the drive system yaw moment compensation control strategy and the active suspension roll compensation control strategy; if a braking signal is detected, the target torque compensation control strategy is a combination of the braking system yaw moment compensation control strategy and the active suspension roll compensation control strategy.

In some embodiments, torque compensation is performed on the vehicle according to a combination of the drive system yaw moment compensation control strategy and the active suspension roll compensation control strategy, including: obtaining the vehicle's front and rear axle torque according to the drive system yaw moment compensation control strategy, and performing torque compensation on the vehicle's front and rear axles according to the vehicle's front and rear axle torque; and, obtaining a suspension drive current value according to the active suspension roll compensation control strategy, and controlling the vehicle suspension according to the suspension drive current value.

In some embodiments, the front and rear axle torques of the vehicle are obtained according to the yaw moment compensation control strategy of the drive system, including: obtaining the total torque according to the vehicle throttle depth and acquiring the road adhesion coefficient and the vehicle longitudinal acceleration; obtaining the vehicle rear axle torque distribution ratio according to the road adhesion coefficient, the vehicle longitudinal acceleration and a second vehicle intrinsic parameter; obtaining the front and rear axle torques of the vehicle according to the total torque and the rear axle torque distribution ratio.

In some embodiments, torque compensation is performed on the vehicle according to a combination of the braking system yaw moment compensation control strategy and the active suspension roll compensation control strategy, including: obtaining a yaw compensation torque according to the braking system yaw moment compensation control strategy, and performing torque compensation on the vehicle according to the yaw compensation torque; and, obtaining a suspension drive current value according to the active suspension roll compensation control strategy, and controlling the vehicle suspension according to the suspension drive current value.

In some embodiments, the vehicle status information also includes a yaw angular velocity value and a vehicle speed value, and the yaw compensation torque is obtained according to the yaw moment compensation control strategy of the braking system, including: obtaining a yaw angular velocity deviation value according to the yaw angular velocity value; performing PID operation according to the yaw angular velocity deviation value to obtain the yaw compensation torque, where the proportional coefficient in the PID operation can be obtained by querying a mapping table of proportional gain and vehicle speed value according to the vehicle speed value.

In some embodiments, the suspension driving current value is obtained according to the active suspension roll compensation control strategy, including: obtaining a roll angle deviation value and a roll angle change rate according to the vehicle roll angle value; obtaining a suspension damping force according to the roll angle deviation value and the roll angle change rate; and obtaining the suspension driving current value according to the suspension damping force.

In some embodiments, controlling the vehicle suspension according to the suspension driving current value includes: controlling one or more of the suspension damping force, suspension height and suspension stiffness according to the suspension driving current value, where the control priority of the suspension damping force is higher than the control priority of the suspension height, and the control priority of the suspension height is higher than the control priority of the suspension stiffness.

In some embodiments, the target torque compensation control strategy is determined according to the vehicle roll angle value and the steering wheel angle value, including: if the steering wheel angle value is less than a preset steering wheel angle threshold and the vehicle roll angle value is greater than or equal to the preset roll angle threshold, then the target torque compensation control strategy is determined to be a drive system yaw torque compensation control strategy or a brake system yaw torque compensation control strategy; the vehicle state information also includes a yaw angular velocity value and vehicle speed value, performing the torque compensation on the vehicle according to the target torque compensation control strategy includes: obtaining a yaw angular velocity deviation value according to the yaw angular velocity value; and performing PID operation according to the yaw angular velocity deviation value to obtain a yaw compensation torque, where the proportional coefficient in the PID operation can be obtained by querying a mapping table of proportional gain and vehicle speed value according to the vehicle speed value.

In some embodiments, the dynamic change scenario of the vehicle is determined according to the vehicle roll angle value and the steering wheel angle value, including: if the steering wheel angle value is less than a preset steering wheel angle threshold and the vehicle roll angle value is greater than or equal to the preset roll angle threshold, then the dynamic change scenario of the vehicle is determined to be a second scenario, and the second scenario is the dynamic change of the vehicle caused by the external environment of the vehicle; the vehicle state information also includes a yaw angular velocity value and a vehicle speed value, and performing the torque compensation on the vehicle according to the target torque compensation control strategy includes: obtaining a yaw angular velocity deviation value according to the yaw angular velocity value; and performing PID operation according to the yaw angular velocity deviation value to obtain a yaw compensation torque, where the proportional coefficient in the PID operation can be obtained by querying a mapping table of proportional gain and vehicle speed value according to the vehicle speed value.

In some embodiments, after obtaining the yaw compensation torque, the vehicle control method also includes: obtaining a third vehicle intrinsic parameter; querying a mapping table of a third vehicle intrinsic parameter and a yaw compensation torque threshold value according to the third vehicle intrinsic parameter to obtain a corresponding yaw compensation torque threshold value; and if the yaw compensation torque exceeds the yaw compensation torque threshold value, performing torque compensation on the vehicle according to the yaw compensation torque threshold value.

The second aspect of the present application proposes a vehicle control device, including: an information acquisition module for acquiring vehicle status information; a control strategy determination module for determining a target torque compensation control strategy based on the vehicle status information, where the target torque compensation control strategy includes one or both of the drive system yaw moment compensation control strategy, the braking system yaw moment compensation control strategy and the active suspension roll compensation control strategy; and a control module for performing torque compensation on the vehicle according to the target torque compensation control strategy.

According to the vehicle control device of an embodiment of the present application, the control strategy determination module determines the corresponding target torque compensation control strategy through the vehicle state information obtained by the information acquisition module, the target torque compensation control strategy can integrate the control of the two systems to achieve the vector force fusion control of the yaw moment and the roll moment, or adopt an effective compensation control strategy according to the specific situation of the current dynamic change of the vehicle, which can optimize the vehicle's operating posture, improve the control effect in certain vehicle dynamic change scenarios, improve the control efficiency, and enhance the driving experience for users.

In some embodiments, the second aspect of the present application proposes a vehicle control device, including: an information acquisition module for acquiring vehicle status information; a scene recognition module for identifying the dynamic change scenarios of the vehicle based on the vehicle status information; a control strategy determination module for determining a target torque compensation control strategy based on the dynamic change scenarios, where the target torque compensation control strategy includes one or a both of the drive system yaw moment compensation control strategy, the braking system yaw moment compensation control strategy and the active suspension roll compensation control strategy; a control module for performing torque compensation on the vehicle according to the target torque compensation control strategy.

According to the vehicle control device of the embodiment of the present application, the scene recognition module identifies the dynamic change scenario of the vehicle according to the vehicle status information, and adopts the corresponding target torque compensation control strategy considering the dynamic change scene of the vehicle. The target torque compensation control strategy can integrate the control of the two systems to realize the vector force fusion control of the yaw moment and the roll moment, or adopt an effective compensation control strategy according to the specific situation of the current dynamic change of the vehicle, which can optimize the vehicle's operating posture, improve the control effect in certain vehicle dynamic change scenarios, improve the control efficiency, and enhance the driving experience for users.

The third aspect of the present application proposes a vehicle, which includes: a drive system, a braking system and a suspension system; a domain controller, and the domain controller is connected to the drive system, the braking system and the suspension system to implement the vehicle control method.

According to the vehicle of the embodiment of the present application, by executing the vehicle control method of the above embodiment, the dynamic change scenario of the vehicle is identified according to the vehicle state information, and the corresponding target torque compensation control strategy is adopted considering the dynamic change scenario of the vehicle, the target torque compensation control strategy can integrate the control of the two systems to realize the vector force fusion control of the yaw moment and the roll moment, or adopt an effective compensation control strategy specifically tailored to the specific situation of the current dynamic change of the vehicle, which can optimize the vehicle's operating posture, improve the control effect in certain vehicle dynamic change scenarios, improve the control efficiency, and enhance the driving experience for users.

Additional aspects and advantages of the present application will be described in part in the description below, and in part will become apparent from the description below, or will be learned through the practice of the present application.

## BRIEF DESCRIPTION OF THE DRAWINGS

The above and/or additional aspects and advantages of the present application will become apparent and easily understood from the description of the embodiments in conjunction with the following drawings, in which:

FIG. 1 is a flow chart of a vehicle control method according to an embodiment of the present application;
FIG. 2 is a flow chart of a vehicle control method according to another embodiment of the present application;
FIG. 3 is a schematic diagram of a vehicle rolling over according to an embodiment of the present application;
FIG. 4 is a schematic diagram of a membership function of a roll angle deviation $E\alpha$ and a change rate $E\omega$ according to an embodiment of the present application;
FIG. 5 is a schematic diagram of a suspension force membership function according to an embodiment of the present application;
FIG. 6 is a block diagram of a vehicle control device according to an embodiment of the present application;
FIG. 7 is a block diagram of a vehicle control device according to an embodiment of the present application;
FIG. 8 is a block diagram of a vehicle according to an embodiment of the present application.

## SUMMARY

The embodiments described with reference to the accompanying drawings are exemplary, and embodiments of the present application are described in detail below.

The vehicle control method of an embodiment of the present application takes into account that in some scenarios, the current improvement effect on vehicle motion is limited, and due to different control targets, in some scenarios, yaw control will have an adverse effect on roll control, and vice versa. Therefore, the method of the embodiment of the present application adopts different systems for torque compensation based on different scenarios, and some scenarios are combined with the two systems for joint control, which can achieve the vector force fusion control of the vehicle's yaw characteristics and roll characteristics, or adopt an effective compensation control strategy for the specific situation of the vehicle's current dynamic changes, which can optimize the vehicle's operating posture, improve control efficiency, and enhance the driving experience for users..

The vehicle control method according to an embodiment of the present application is described below with reference to the accompanying drawings.

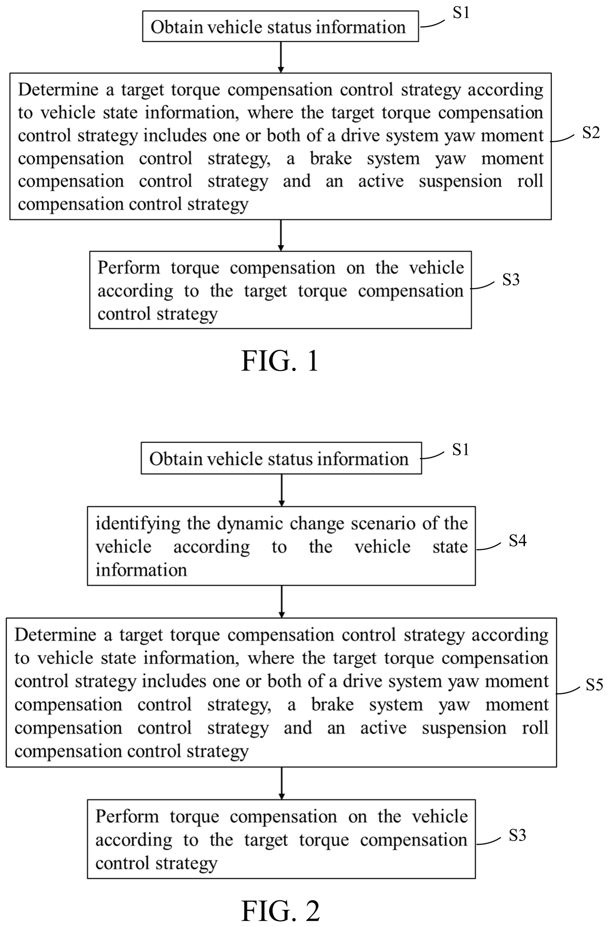

FIG. 1 is a flow chart of a vehicle control method according to an embodiment of the present application. As shown in FIG. 1 , the vehicle control method includes:

S1, obtaining vehicle status information.
S2, determine a target torque compensation control strategy according to vehicle state information, where the target torque compensation control strategy includes one or both of a drive system yaw moment compensation control strategy, a brake system yaw moment compensation control strategy and an active suspension roll compensation control strategy.
S3, performing torque compensation on the vehicle according to the target torque compensation control strategy.

FIG. 2 is a flow chart of a vehicle control method according to an embodiment of the present application. As shown in FIG. 2, the vehicle control method includes:

S1, obtaining vehicle status information.

Specifically, the vehicle status information may include vehicle sensor information or status information obtained through the vehicle CAN line, for instance, it may include but is not limited to vehicle wheel speed, vehicle speed, steering wheel angle, roll angular acceleration, lateral acceleration, yaw angular velocity, etc.

Among them, the steering wheel angle can be obtained through TAS (Torque and Angle Sensor); regarding the vehicle wheel speed, the wheel speed value of each wheel can be obtained from the braking wheel speed sensor; the vehicle speed can be automatically obtained by estimating the vehicle speed or directly obtained through the sensor; the roll angular acceleration and lateral acceleration can be directly obtained through the external IMU sensor; the yaw angular velocity can be directly obtained through the external IMU sensor signal or obtained by estimation.

S4, identifying the dynamic change scenario of the vehicle according to the vehicle state information.

Specifically, changes in the vehicle's posture can be judged based on changes in vehicle status information, for instance, changes in the steering wheel angle and changes in the external wind will cause changes in the vehicle's yaw angle and/or roll angle, that is, cause changes in the vehicle's posture, which means that the vehicle undergoes dynamic changes.

Therefore, in the embodiment, the dynamic change scenario of the vehicle can be understood as the change in the vehicle dynamics due to the vehicle's own operation input or external environment input, the different dynamic changes of the vehicle caused by different factors, and the different posture changes of the vehicle caused, which can be different dynamic change scenarios of the vehicle.

In an embodiment of the present application, changes in vehicle posture are determined based on changes in vehicle status information, and different vehicle dynamic change scenarios can be set, such as vehicle dynamic change scenarios caused by the external environment, or vehicle dynamic change scenarios caused by user operation of the vehicle, etc.

S5, determining a target torque compensation control strategy according to a dynamic change scenario, where the target torque compensation control strategy includes one or both of a drive system yaw moment compensation control strategy, a brake system yaw moment compensation control strategy and an active suspension roll compensation control strategy.

S3, performing torque compensation on the vehicle according to the target torque compensation control strategy.

In the embodiment of the present application, considering different factors that cause changes in vehicle motion, different torque compensation control strategies are adopted for different dynamic change scenarios of the vehicle, moreover, for certain dynamic change scenarios of the vehicle, the torque compensation control strategies of the two systems can be combined to achieve vector force fusion control of the vehicle's yaw characteristics and roll characteristics, optimize the vehicle's motion posture, and improve control efficiency.

Among them, the target torque compensation control strategy can be implemented through the drive system, braking system and active suspension control. For instance, when the external environment causes dynamic changes in the vehicle, the vehicle generates a yaw force, then the drive system or braking system can be configured to compensate for the yaw force based on the current driving state of the vehicle. Or, if the vehicle generates a yaw force due to user operation of the vehicle, such as input from the steering wheel angle, the drive system can be used to compensate for the yaw force. Alternatively, if the user's operation of the vehicle and the external environment both affect the vehicle's movement, the vehicle has both yaw force and roll. In this case, the drive system and active suspension control or the braking system and active suspension control can be combined to compensate for the yaw moment and roll moment, so as to achieve the purpose of efficiently optimizing the vehicle's motion posture.

According to the vehicle control method of the embodiment of the present application, the dynamic change scenario of the vehicle is identified according to the vehicle state information, and the corresponding target torque compensation control strategy is adopted considering the dynamic change scenario of the vehicle. The target torque compensation control strategy can integrate the control strategies of the two systems to achieve the vector force fusion control of the yaw moment and the roll moment, or adopt an effective compensation control strategy according to the specific situation of the current dynamic change of the vehicle, which can optimize the vehicle's operating posture, improve the control effect in certain vehicle dynamic change scenarios, improve the control efficiency, and enhance the driving experience for users.

It can be understood that, as shown in FIG. 1 and 2, the dynamic change scenario of the vehicle can be determined based on the vehicle status information, and then the target torque compensation control strategy can be determined based on the dynamic change scenario of the vehicle. Alternatively, the relevant steps of determining the dynamic change scenario of the vehicle can be omitted, and the target torque compensation control strategy can be directly determined based on the vehicle status information.

In some embodiments, in order to improve the stability and reliability of vehicle control, after the vehicle status information being acquired, the vehicle status information can be preprocessed, such as performing mean filtering processing.

Specifically, during the driving process of the vehicle, different sensors on the vehicle body can continuously collect data at a certain sampling frequency, due to the limitations of the sensor's own sensitivity and external interference, these signals often contain some random noise, In order to improve the stability and reliability of the system, these signals can be performed mean filtering to eliminate noise and random errors. For instance, after obtaining the relevant sensor data of the vehicle through the inertial measurement unit, the raw sensor data can be filtered through the signal processing module.

In some embodiments of the present application, the vehicle state information may include a steering wheel angle value and a vehicle lateral acceleration value, where the steering wheel angle value may be obtained through a TAS, and the vehicle lateral acceleration value may be obtained through an IMU or other methods.

In an embodiment, the vehicle dynamic change scenario identified based on the vehicle state information includes: obtaining the vehicle roll angle value based on the vehicle lateral acceleration value and the first vehicle intrinsic parameter; and determining the vehicle dynamic change scenario based on the vehicle roll angle value and the steering wheel angle value.

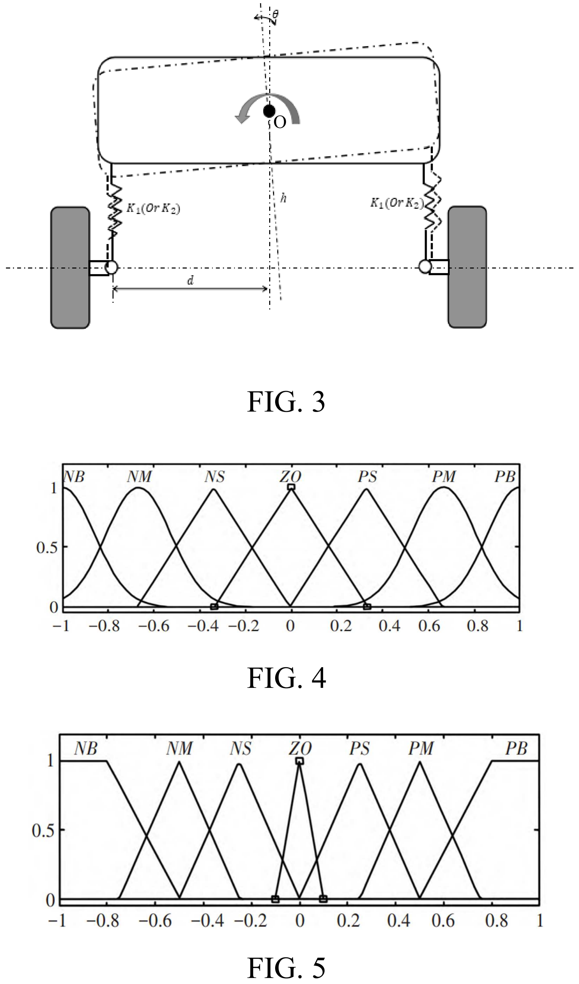

Specifically, the roll angle of the vehicle in dynamic motion can be calculated through input signals such as vehicle lateral acceleration and vehicle parameters. As shown in FIG. 3, when the vehicle rolls, the lateral acceleration will generate a torque according to the changes that occur, and the suspension force will generate a torque of the same magnitude and opposite direction, and the torque generated by the suspension force and the torque generated by the lateral acceleration offset each other. Based on this, the roll angle can be calculated.

As shown in FIG. 3, when the vehicle rolls, the body rotates around the y-axis center point O. Its rotation radius is half of the wheelbase, and the suspension dynamic deflection corresponding to the roll angle change should be an arc. Considering that the roll angle is too small relative to the wheelbase, the arc of the suspension dynamic deflection can be assumed to be a straight line, by establishing the suspension dynamic deflection formula and the force balance equation of suspension deformation, the roll angle $\theta$ can be obtained as:

$$\theta = \frac{2 \times m \times a_y \times h}{k_1 \times d^2 + k_2 \times d^2} \quad (1)$$

In the above formula, k1 and k2 are the spring stiffness of the front and rear suspensions, d is the wheelbase of the vehicle, m is the vehicle mass, $a_y$ is the lateral acceleration of the vehicle, and h is the distance from the center of mass of the vehicle to the ground, where k1, k2, d, m and h are the first vehicle intrinsic parameters, that is, the parameters that have been determined by the vehicle, and $a_y$ can be obtained through sensor detection.

In some embodiments of the present application, based on the comparison between the steering wheel angle value and the vehicle roll angle value and the system setting value, it can be classified into three dynamic change scenarios, namely the first scenario, the second scenario and the third scenario.

The third scenario can be the vehicle dynamic changes caused by the input of the steering wheel angle; the second scenario can be the vehicle dynamic changes caused by the external environment of the vehicle; the first scenario may be a vehicle dynamic change resulting from the superposition of the steering wheel angle input and the vehicle's external environment.

The steering wheel angle value and the vehicle roll angle value can be compared with the calibration threshold value for scene judgment and decision making.

For instance, if the steering wheel angle value is greater than or equal to the preset steering wheel angle threshold and the vehicle roll angle value is less than the preset roll angle threshold, that is, the dynamic change of the vehicle is mainly caused by the steering wheel input, then the dynamic change scenario of the vehicle is determined to be the third scenario.

If the steering wheel angle value is less than the preset steering wheel angle threshold and the vehicle roll angle value is greater than or equal to the preset roll angle threshold, that is, the vehicle dynamics change is mainly caused by external environment input, such as wind changes, then the vehicle dynamic change scenario is determined to be the second scenario.

If the steering wheel angle value is greater than or equal to the preset steering wheel angle threshold and the vehicle roll angle value is greater than or equal to the preset roll angle threshold, at this time the steering wheel input and the external environment input act together on the vehicle to cause dynamic changes in the vehicle, then the dynamic change scenario of the vehicle is determined to be the first scenario.

It can be understood that the settings of the above three scenarios are only examples and can also be set in other ways, such as setting two scenarios or setting more than three scenarios by considering the impact of more factors on the dynamic changes of the vehicle. However, if the schemes are similar to the above three scenarios described in this application, they all fall within the scope of the concept of this application.

In the embodiment of the present application, different dynamic change scenarios of the vehicle correspond to different torque compensation control strategies to optimize the vehicle operating posture in different scenarios, improve vehicle control efficiency, and enhance the driving experience for users.

The following takes the three scenarios given above as examples to explain the torque compensation control strategy for each scenario.

If the dynamic change scenario of the vehicle is identified as the third scenario according to the vehicle state information, the target torque compensation control strategy is determined to be the drive system yaw torque compensation control strategy, that is, yaw torque compensation is performed through the drive system.

For example, the specific situation of the third scenario may be: when the vehicle is turning, due to the driver's mistake in operating the steering wheel, the yaw angle of the vehicle increases rapidly, causing the vehicle on the edge of critical stability. If braking is applied at this time, it is highly likely to cause a rollover. Therefore, in the embodiment of the present application, a driving force control system is adopted to reasonably distribute the power to the rear axle to reduce the difference in yaw torque caused by the mistake. That is, the results of the scene decision module and the state estimation module are sent to the drive system in the form of instructions, and the yaw torque is compensated by the drive system.

Specifically, the total torque is obtained according to the vehicle throttle depth, and the road adhesion coefficient and the vehicle longitudinal acceleration are obtained, where the throttle depth, the road adhesion coefficient and the vehicle longitudinal acceleration can be obtained by sensor detection or estimation based on sensor data; the vehicle rear axle torque distribution ratio is obtained according to the road adhesion coefficient, the vehicle longitudinal acceleration and the second vehicle intrinsic parameter, and the vehicle rear axle torque distribution ratio can refer to the following calculation process; and the vehicle front and rear axle torques are controlled according to the total torque and the rear axle torque distribution ratio, where the rear axle torque distribution ratio is the ratio of the rear axle distribution torque to the total torque.

In some embodiments, the calculation process of the rear axle torque distribution ratio can be assisted by a two-degree-of-freedom model. The longitudinal and lateral balance equations of the vehicle can be obtained through the two-degree-of-freedom model:

$$\begin{cases} M \cdot a_x = F_{x1} + F_{x2} \\ M \cdot a_y = F_{y1} + F_{y2} \end{cases} \quad (2)$$

M is the vehicle body instruction, $a_x$ is the lateral acceleration, $a_y$ is the longitudinal acceleration, $F_{x1}$ and $F_{x2}$ are the lateral forces, and $F_{y1}$ and $F_{y2}$ are the longitudinal forces.

Assuming that the friction circle principle is satisfied between the longitudinal force and the lateral force of the tire, and the size of the friction circle is only related to the road adhesion coefficient $\mu$ and the tire load, the wheel limits of the front and rear axles are:

$$\begin{cases} F_{x1}^2 + F_{y1}^2 = [\mu \cdot (F_{zf} - \Delta F_z)]^2 \\ F_{x2}^2 + F_{y2}^2 = [\mu \cdot (F_{zr} - \Delta F_z)]^2 \end{cases} \quad (3)$$

In the above formula (3), $F_{zf}$ and $F_{zr}$ are the static loads of the front axle and rear axle respectively:

$$\begin{cases} F_{zf} = M \cdot g \cdot \dfrac{b}{L} \\ F_{zr} = M \cdot g \cdot \dfrac{a}{L} \end{cases} \quad (4)$$

$\Delta F_z$ is the load transfer between the front and rear axles:

$$\Delta F_z = (F_{x1} + F_{x2}) \cdot \frac{h}{L} \quad (5)$$

In formula (5), h is the height of the center of mass of the vehicle.

The tire available road adhesion rate can be obtained by the following formula (6):

$$\mu \le \frac{\sqrt{a_x^2 + a_y^2}}{g} \quad (6)$$

When considering the turning condition, the lateral forces of the front and rear wheels are:

$$\begin{cases} F_{y1} = M \cdot a_y \cdot \dfrac{b}{L} \\ F_{y2} = M \cdot a_y \cdot \dfrac{a}{L} \end{cases} \quad (7)$$

The conditions for the front and rear wheels to reach the adhesion limit are:

$$\begin{cases} F_{x1}^2 + (M \cdot a_y \cdot \dfrac{b}{L})^2 = [\mu(M \cdot g \cdot \dfrac{b}{L} - (F_{x1} + F_{x2})) \cdot \dfrac{h}{L}]^2 \\ F_{x2}^2 + (M \cdot a_y \cdot \dfrac{b}{L})^2 = [\mu(M \cdot g \cdot \dfrac{a}{L} - (F_{x1} + F_{x2})) \cdot \dfrac{h}{L}]^2 \end{cases} \quad (8)$$

The torque distribution relationship between the front and rear wheels is defined as:

$$M \cdot a_x = F_{x1} + F_{x2} \quad (9)$$

Substituting $a_x$, $a_y$ and the rear axle torque distribution ratio R into formula (3), we can obtain:

$$\begin{cases} [M \cdot a_x \cdot (1-R)]^2 + (M \cdot a_y \cdot \dfrac{b}{L})^2 = [\mu \cdot (M \cdot g \cdot \dfrac{b}{L} - M \cdot a_x \cdot \dfrac{h}{L})]^2 \\ [M \cdot a_x \cdot R]^2 + (M \cdot a_y \cdot \dfrac{a}{L})^2 = [\mu \cdot (M \cdot g \cdot \dfrac{b}{L} - M \cdot a_x \cdot \dfrac{h}{L})]^2 \end{cases} \quad (10)$$

In the above formula (10), the parameters M, a, b, L, and h are the basic parameters of the vehicle, i.e., the second vehicle intrinsic parameters, and the rear axle torque distribution ratio R is calculated by combining the road adhesion coefficient μ and the vehicle state $a_x$ longitudinal acceleration and $a_y$ lateral acceleration. The lateral stability of the vehicle is very important, so in this calculation, the rear axle torque distribution ratio R is mainly calculated using the current longitudinal acceleration and the road adhesion coefficient, and then the drive system can control the vehicle front and rear axle torques based on the total torque and R to achieve yaw moment compensation in the third scenario.

For the second scenario, due to the change in environmental factors that leads to the change in the dynamic characteristics of the vehicle, and the external environment is characterized by suddenness and randomness, it will have a significant impact on the stability of the vehicle's driving. To ensure a smooth and comfortable driving experience, in an embodiment of the present application, if the dynamic change scenario of the vehicle is the second scenario, after obtaining the vehicle driving signal, the target torque compensation control strategy is further determined according to the vehicle driving signal, where in the second scenario, the target torque compensation control strategy can be the yaw moment compensation control strategy of the drive system or the yaw moment compensation control strategy of the braking system.

Further, in the embodiment, in the second scenario, if a torque request signal is detected, the target torque control strategy is determined to be the drive system yaw moment compensation control strategy; if a braking signal is detected, the target torque control strategy is determined to be the braking system yaw moment compensation control strategy.

In the second scenario, the driving system or the braking system uses a PID algorithm to obtain the yaw compensation torque. Specifically, the vehicle state information includes a yaw angular velocity value, and a yaw angular velocity deviation value can be obtained according to the yaw angular velocity value. The yaw angular velocity deviation value is used as an input to the PID operator, and the yaw compensation torque is used as an output, that is, the PID operation is performed according to the yaw angular velocity deviation value to obtain the yaw compensation torque.

Specifically, the yaw angular velocity can be obtained through the sensor, and the yaw angular velocity deviation can be calculated in real time, and the yaw angular velocity deviation value = the detected yaw angular velocity - the calibrated yaw angular velocity, where the calibrated yaw angular velocity can be obtained by calculating the dynamic equation. Further, the obtained yaw angular velocity deviation value is input into the PID operator for PID operation to obtain the yaw compensation torque.

Among them, during PID operation, the proportional coefficient, i.e., the P value, can be obtained by querying the mapping table of proportional gain and vehicle speed value according to the vehicle speed value, and the mapping table can be obtained through the actual vehicle calibration, as detailed below.

Given the yaw angular velocity deviation, the yaw angular velocity deviation is used as the control variable. The optimal control LQR algorithm will be applied to the controller design. The state equation of the vehicle model considering linear two degrees of freedom is:

$$\begin{bmatrix} \dot{\beta} \\ \dot{\omega}_r \end{bmatrix} = A \cdot \begin{bmatrix} \beta \\ \omega_r \end{bmatrix} + B \cdot \delta \qquad (11)$$

In formula (11),

$$A = \begin{bmatrix} \dfrac{-(K_f + K_r)}{mu} & \dfrac{bK_r - aK_f}{mu} - 1 \\ \dfrac{bK_r - aK_f}{I_z} & -\dfrac{a^2 K_f + b^2 K_r}{I_z u} \end{bmatrix} \quad B = \begin{bmatrix} \dfrac{K_f}{mu} \\ \dfrac{aK_f}{I_z} \end{bmatrix} \qquad (12)$$

$\omega_r$ is the ideal yaw angular velocity, β is the ideal sideslip angle at the center of mass, and δ is the front wheel turning angle of the vehicle. When the car is turning, the actual yaw angular velocity $\omega_{rr}$ and the sideslip angle at the center of mass $\beta_r$ often deviate from the ideal value, that is, they deviate from the driver's driving intention. At this time, the vehicle posture can be adjusted by applying an active yaw torque Δmz to the vehicle to make it closer to the driver's driving intention.

Within the vehicle linear range, the vehicle state equation with active yaw moment control can be expressed as:

$$\begin{bmatrix} \dot{\beta}_r \\ \omega_{rr} \end{bmatrix} = A \cdot \begin{bmatrix} \beta_r \\ \omega_{rr} \end{bmatrix} + B \cdot \delta + E \cdot \Delta M_z \qquad (13)$$

From equation (11) and equation (13), we can obtain:

$$\begin{bmatrix} \Delta \dot{\beta} \\ \Delta \dot{\omega}_r \end{bmatrix} = A \cdot \begin{bmatrix} \Delta \beta \\ \Delta \dot{\omega}_r \end{bmatrix} + E \cdot \Delta M_z \qquad (14)$$

It can be seen from the above formula that the magnitude of the additional yaw moment is related to the vehicle speed and has nothing to do with the front wheel angle of the vehicle, and the evaluation index is designed as follows:

$$J = \frac{1}{2} \cdot \int_0^\infty [x^T(t) \cdot Q \cdot x(t) + u^T(t) \cdot R \cdot u(t)] dt \qquad (15)$$

The above formula establishes the relationship between the vehicle motion posture error and Δmz, where Q and R are weight coefficient matrices, Q is a symmetric positive definite matrix, and R is a symmetric positive definite matrix. According to the LQR method, the optimal control quantity is:

$$u^* = -K \cdot x(t) \qquad (16)$$

The feedback coefficient K is:

$$K = R^{-1} \cdot B^T \cdot P \qquad (17)$$

where P can be obtained by solving the following algebraic Riccati equation:

$$P \cdot A + A^T \cdot P - P \cdot B \cdot R^{-1} \cdot B^T \cdot P + Q = 0 \quad (18)$$

Considering the physical meaning of vehicle stability control, R=1, Q takes the following diagonal form:

$$Q = \begin{bmatrix} q_1 & 0 \\ 0 & q_2 \end{bmatrix}; \quad (19)$$

Without considering the sideslip angle of the center of mass, the evaluation index can be expressed as:

$$J = \frac{1}{2} \cdot \int_0^\infty [q_2 \cdot \Delta r^2(t) + \Delta M_z^2(t)]dt \quad (20)$$

Let K=[k1,k2], then:

$$\Delta M_{rsc} = -K \cdot x(t) = --k_1 \Delta\beta(t) - k_2 \cdot \Delta\omega_r(t) \quad (21)$$

The corresponding feedback coefficient needs to be calculated offline and then presented in a data table. In the actual model, the feedback coefficient is determined by querying the table. The advantage of this approach is that the system does not need to consume too much computing power to calculate the feedback coefficients online.

In the control implementation process of the embodiment of the present application, the center of mass sideslip angle can be ignored, so the coefficient k1 can be taken as 0 according to the expression of formula (19). In summary, the coefficient k2 can be directly obtained by expressing formula (17). Considering R = 1, formula (17) can be further simplified as follows:

$$K = B^T \cdot P \quad (22)$$

Therefore, according to the expression of formula (18), it can be obtained that the K value is directly related to Q. After actual vehicle calibration, q1 and q2 can be determined. According to the Q result, the offline calculation result of k2 and vehicle speed can be obtained, that is, the mapping table.

Based on the mapping table above, the proportional coefficient in the PID operation is obtained, and the yaw angular velocity difference is used as input for PID operation to obtain the yaw compensation torque. The drive system or the braking system is controlled according to the yaw compensation torque to adjust the dynamic changes of the vehicle caused by the external environment. Therefore, an effective compensation strategy is adopted according to the specific situation of the current dynamic changes of the vehicle, which can optimize the vehicle's operating posture and enhance the driving experience.

Furthermore, in the embodiment, for the second scenario, the yaw compensation torque is obtained through the PID algorithm. When the calculated yaw compensation torque is much larger than the torque value that the whole vehicle can actually control, it will not meet the demand. At this time, the range of the yaw moment value can be limited to achieve the effect of yaw moment compensation.

Specifically, a yaw compensation torque threshold value is obtained, and if the yaw compensation torque exceeds the yaw compensation torque threshold value, torque compensation is performed on the vehicle according to the yaw compensation torque threshold value. For instance, if the calculated yaw compensation torque is greater than the maximum threshold value of the yaw compensation torque, it means that the vehicle cannot reach the calculated yaw compensation torque, and the maximum threshold value of the yaw compensation torque is used to perform torque compensation on the vehicle, to ensure both control and compensation effects can be achieved. For another instance, if the calculated yaw compensation torque is less than the minimum threshold value of the yaw compensation torque, torque compensation is performed on the vehicle according to the minimum threshold value of the yaw compensation torque.

In the embodiment, the yaw compensation moment threshold value is related to the third vehicle intrinsic parameter, such as the wheelbase, track width, vehicle height, and mass distribution form of the vehicle, and the yaw compensation moment threshold value can be obtained by looking up the third vehicle intrinsic parameter table. Therefore, the maximum executable compensation moment of different models of vehicles is different, and the yaw compensation moment threshold value can be obtained by actual vehicle calibration.

In an embodiment, if the dynamic change scenario of the vehicle is identified as the first scenario according to the vehicle state information, the vehicle driving signal is further obtained, and the target torque compensation control strategy is determined according to the vehicle driving signal. In the first scenario, due to the change of the dynamic characteristics of the vehicle caused by environmental factors and the steering wheel angle, in this process, it is considered that the dynamic change of the vehicle is linearly superimposed, so in some embodiments, the target torque compensation control strategy is a combination of the yaw moment compensation control strategy of the drive system and the active suspension roll compensation control strategy, or the target torque compensation control strategy is a combination of the yaw moment compensation control strategy of the braking system and the active suspension roll compensation control strategy. Among them, the yaw moment compensation is performed by the drive system or the braking system, the roll angle is suppressed by the active suspension control, and the dynamic posture of the vehicle is optimized by vector force fusion.

Specifically, if a torque request signal is detected, the target torque compensation control strategy is determined to be a combination of the yaw moment compensation control strategy of the drive system and the active suspension roll compensation control strategy; if a braking signal is detected, the target torque compensation control strategy is determined to be a combination of the yaw moment compensation control strategy of the braking system and the active suspension roll compensation control strategy.

In some embodiments, when the drive system and active suspension control are combined to perform torque compensation on the vehicle, the front and rear axle torques of the vehicle are obtained according to the yaw moment compensation control strategy of the drive system. For instance, similar to the yaw moment compensation performed by the drive system in the third scenario, the drive system obtains the total torque according to the vehicle throttle depth and obtains the road adhesion coefficient and the longitudinal acceleration of the vehicle; obtains the rear axle torque distribution ratio of the vehicle according to the road adhesion coefficient, the longitudinal acceleration of the vehicle and the second vehicle intrinsic parameter; and obtains the front and rear axle torques of the vehicle according to the total torque and the rear axle torque distribution ratio. The front and rear axles of the vehicle are subjected to torque compensation according to the front and rear axle torques of the vehicle, and the suspension drive current value is obtained according to the active suspension roll compensation control strategy, and the vehicle suspension is controlled according to the suspension drive current value to achieve active suspension roll angle compensation to suppress the roll angle.

That is, in the first scenario, when there is a torque request, the drive system yaw angle torque compensation value add the active suspension roll angle compensation value equal to the combined control system torque compensation value, which can achieve the fusion force control of the vehicle's yaw characteristics and roll characteristics and optimize the vehicle's motion posture.

In other embodiments, when the braking system and active suspension control are combined to perform torque compensation on the vehicle, the yaw compensation torque is obtained according to the yaw torque compensation control strategy of the braking system, and the vehicle is compensated for torque based on the yaw compensation torque. Specifically, the yaw velocity deviation value is obtained according to the yaw angular velocity value, and the yaw angular velocity deviation value is used as input, and the yaw compensation torque is obtained by performing PID operation according to the yaw angular velocity deviation value, where the proportional coefficient in the PID operation can be obtained by querying the mapping table of proportional gain and vehicle speed value according to the vehicle speed value, and the calibration of the mapping table can refer to the above description and will not be repeated here. And, the suspension drive current value is obtained according to the active suspension roll compensation control strategy, and the vehicle suspension is controlled according to the suspension drive current value.

That is, in the first scenario, when there is a braking signal, the braking system yaw angle torque compensation value add the active suspension roll angle compensation value eaual to the combined control system torque compensation value, which can realize the fusion force control of the vehicle's yaw characteristics and roll characteristics and optimize the vehicle's motion posture.

The active suspension roll compensation control strategy is described below with reference to specific embodiments.

In some embodiments, a roll angle deviation value and a roll angle change rate are obtained according to the vehicle roll angle value; a suspension damping force is obtained according to the roll angle deviation value and the roll angle change rate; a suspension driving current value is obtained according to the suspension damping force, and then the suspension is controlled according to the suspension driving current value to suppress the roll angle of the vehicle.

Specifically, the roll control of the vehicle controls the damping force of the suspension by controlling the current of the suspension, thereby achieving the effect of roll adjustment. The specific working principle is: first, the vehicle lateral motion dynamics equation including the vehicle yaw rate, lateral speed and roll angle is established in the suspension control strategy system:

$$\begin{cases} mv_x(\dfrac{a_y}{v_x}+\gamma)-m_sh_s\ddot{\alpha}=2(F_{yr}+F_{yf}) \\ I_z\dot{\gamma}=2F_{yf}l_f-2F_{yr}l_r+M_z \\ I_\alpha\ddot{\alpha}+(K_{\alpha f}+K_{\alpha r})\alpha+(F_{sz,f}\dfrac{d_f}{2}+F_{sz,r}\dfrac{d_r}{2})=a_ym_sh_s+m_sh_sg\alpha \end{cases} \quad (23)$$

Then, the expression describing the relationship between the front and rear axle load transfer, the lateral acceleration of the center of mass, and the suspension damping force when the vehicle turns is given. The front and rear axle vertical forces are expressed by the nominal value of the axle load and the axle load transfer:

$$F_{i,z}=F_{i,z}^0+\Delta F_{i,z} \quad (24)$$

Furthermore, the nonlinear relationship between the suspension damping force and the suspension current in the vehicle dynamics equation is expressed by a piecewise linear model:

$$F_{sr,j}=\begin{cases} p_1(I_j)\cdot\dot{\alpha}\cdot d_j/2+q_1(I_j)\cdot\text{sgn}(\dot{\alpha}\cdot d_j/2) & |\dot{\alpha}\cdot d_j/2|>0.1 \\ p_2(I_j)\cdot\dot{\alpha}\cdot d_j/2+q_2(I_j)\cdot\text{sgn}(\dot{\alpha}\cdot d_j/2) & 0.05<|\dot{\alpha}\cdot d_j/2|<0.1 \\ p_3(I_j)\cdot\dot{\alpha}\cdot d_j/2 & |\dot{\alpha}\cdot d_j/2|<0.05 \end{cases} \quad (25)$$

$$p_1(I_j)=x_1I_j^2+y_1I_j+z_1 \quad q_1(I_j)=x_4I_j^2+y_4I_j+z_4$$

$$p_2(I_j)=x_2I_j^2+y_2I_j+z_2 \quad q_2(I_j)=x_5I_j^2+y_5I_j+z_5$$

$$p_3(I_j)=x_3I_j^2+y_3I_j+z_3$$

$x_i\ y_i\ z_i(i=1\sim5)$ *represent the calibration parameters for the experiment.*
where $\dot{\alpha}$ is the roll angle acceleration; $d_j$ is the wheelbase.

With the roll angle deviation $E_\alpha$ and the sideslip angle change rate $E_\omega$ as input and the suspension damping force as output, the corresponding fuzzy rules are established through the single-input single-output fuzzy control algorithm, where the membership function of the roll angle deviation $E_\alpha$ and the change rate $E_\omega$ is shown in FIG. 4, and the suspension force membership function is shown in FIG. 5. The established fuzzy rules are as follows:

| F | | $E_\alpha$ | | | | | | |
|---|---|---|---|---|---|---|---|---|
| | | NB | NM | NS | ZO | PS | PM | PB |
| | NB | NS | NS | NS | NM | NB | NB | NB |
| | NM | NS | NS | NS | NM | NM | NB | NB |
| | NS | NS | NS | NS | NS | NM | NM | NB |
| $E_\omega$ | ZO | PM | PM | PS | ZO | NS | NM | NM |
| | PS | PB | PM | PM | PM | PS | PS | PS |
| | PM | PB | PB | PM | PM | PS | PS | PS |
| | PB | PB | PB | PB | PM | PS | PS | PS |

The fuzzy rule is that when the roll angle deviation value is small, the suspension damping force is small, and the larger the roll angle, the larger the suspension damping force.

After the damping force is obtained by the fuzzy rule, the suspension driving current value can be obtained by the relationship between the damping force and the driving current in the above formula (25). The suspension drive current value is used to control the suspension damping force to suppress the roll angle.

Further, in some embodiments, for the first scenario, three suspension control arbitration priority algorithms can be preset according to the hardware (active suspension) installation conditions of different vehicle models. Specifically, one or more of the suspension damping force, suspension height and suspension stiffness can be controlled according to the suspension drive current value, where the control priority of the suspension damping force is higher than the control priority of the suspension height, and the control priority of the suspension height is higher than the control priority of the suspension stiffness.

For instance, when the vehicle model is only equipped with an actuator for active damping force control, active suspension height control, or active suspension stiffness control, the fusion control of roll and yaw is achieved through the only actuator; for another instance, when the vehicle model is simultaneously equipped with actuators for active damping force control, active suspension height control, active suspension stiffness control, or two sets of actuators therein, control can be performed according to the above control priority to achieve the purpose of better optimizing the vehicle's dynamic characteristics.

In general, the vehicle control method of the embodiment of the present application, considering the vehicle's dynamic change scenarios, that is, considering the changes in the vehicle's yaw and roll characteristics, different torque compensation strategies are adopted for different dynamic change scenarios, and an effective torque compensation strategy is adopted specifically tailored to the specific situation of the vehicle's dynamic changes, and in some scenarios, the fusion control of yaw control and roll stability control can also be achieved to better optimize the vehicle's dynamic operating posture, improve control efficiency, and enhance the driving experience for users.

A second aspect of the present application provides a vehicle control device.

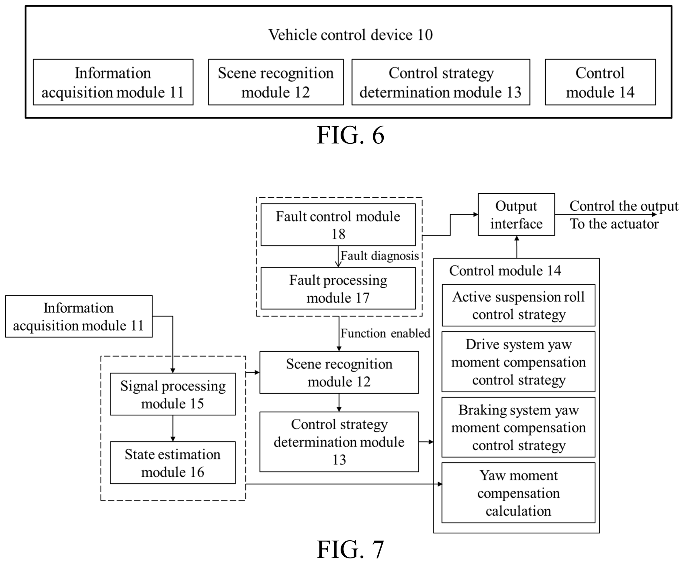

FIG. 6 is a block diagram of a vehicle control device according to an embodiment of the present application. As shown in FIG. 6, the vehicle control device 10 includes an information acquisition module 11 , a scene recognition module 12 , a control strategy determination module 13 and a control module 14 .

The information acquisition module 11 is used to obtain vehicle status information;

The scene recognition module 12 is configured to recognize the dynamic change scenario of the vehicle according to the vehicle state information;

The control strategy determination module 13 is configured to determine the target torque compensation control strategy according to the dynamic change scenario, where the target torque compensation control strategy includes one or a both of the drive system yaw moment compensation control strategy, the brake system yaw moment compensation control strategy and the active suspension roll compensation control strategy;

The control module 14 is configured to perform torque compensation on the vehicle according to the target torque compensation control strategy.

According to the vehicle control device 10 of the embodiment of the present application, the scene recognition module 12 identifies the dynamic change scenario of the vehicle according to the vehicle state information, considers the dynamic change scenario of the vehicle and adopts the corresponding target torque compensation control strategy. The target torque compensation control strategy can integrate the control of the two systems, realize the vector force fusion control of the yaw moment and the roll moment, optimize the operating posture of the vehicle, improve the control effect in certain dynamic change scenarios of the vehicle, improve the control efficiency, and enhance the driving experience of the users.

It can be understood that, as shown in FIG. 6, the scene recognition module 12 can first determine the dynamic change scenario of the vehicle according to the vehicle status information, and the control strategy determination module 13 can then determine the target torque compensation control strategy according to the dynamic change v of the vehicle. The scene recognition module 12 can also be omitted, and the control strategy determination module 13 can directly determine the target torque compensation control strategy according to the vehicle status information. That is, in some embodiments, the vehicle control device includes an information acquisition module 11, a control strategy determination module 13 and a control module 14.

FIG. 7 is a block diagram of a vehicle control device according to another embodiment of the present application. As shown in FIG. 7, the information acquisition module 11 can acquire sensor information and CAN information. The vehicle control device 10 can also include a signal processing module 15 and a state estimation module 16.

The signal processing module 15 can perform mean filtering on the vehicle state information obtained by the information acquisition module 11 to improve the stability and reliability of the device. The state estimation module 16 can estimate the yaw angle deviation value and the vehicle roll angle value, and provide the yaw angle deviation value and the vehicle roll angle value to the control module 14 to facilitate the implementation of the yaw moment compensation and roll angle compensation control strategy.

The control module 14 can realize yaw moment compensation calculation, and yaw moment compensation can include drive system yaw moment compensation control strategy, brake system yaw moment compensation control strategy and active suspension roll compensation control strategy. After obtaining the yaw moment compensation value

14

and/or the roll angle compensation value, the control module 14 outputs them to the actuator through the output interface.

In some embodiments, the vehicle control device 10 may further include a fault processing module 17 and a fault control module 18. Specifically, the fault processing module 17 may perform self-inspection or fault detection and fault diagnosis on the vehicle control device 10, and if there is no fault, the fault control module 18 triggers the vehicle control device 10 to start a function, and if there is a fault, the fault control module 18 outputs a fault prompt or a trigger signal for the actuator to stop working through the output interface to ensure safety.

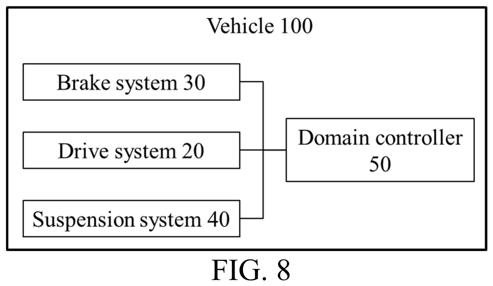

The third embodiment of the present application proposes a vehicle 100, as shown in FIG. 8, the vehicle 100 includes a drive system 20, a brake system 30, a suspension system 40 and a domain controller 50. The domain controller 50 is connected to the drive system 20, the brake system 30 and the suspension system 40 to implement the vehicle control method of the above embodiment.

Specifically, the domain controller 50 can identify the dynamic change scenario of the vehicle based on the vehicle status information, and determine the target torque compensation control strategy based on the dynamic change scenarios. It can also estimate the yaw angle deviation and roll angle value, etc., trigger the corresponding compensation control system to perform compensation, and provide the estimated value to the corresponding compensation control system to optimize the dynamic posture of the vehicle.

According to the vehicle 100 of the embodiment of the present application, by executing the vehicle control method of the above embodiment, the dynamic change scenario of the vehicle is identified according to the vehicle state information, the dynamic change scenario of the vehicle is considered and the corresponding target torque compensation control strategy is adopted. The target torque compensation control strategy can integrate the control of the two systems, realize the vector force fusion control of the yaw moment and the roll moment, optimize the vehicle's operating posture, improve the control effect in certain vehicle dynamic change scenario, improve the control efficiency, and enhance the driving experience for users.

In the description of this specification, the description with reference to the terms "one embodiment", "some embodiments", "illustrative embodiments", "examples", "specific examples", or "some examples" means that the specific features, structures, materials, or characteristics described in conjunction with the embodiment or example are included in at least one embodiment or example of the present application. In this specification, the schematic representation of the above terms does not necessarily refer to the same embodiment or example.

Although the embodiments of the present application have been shown and described, those skilled in the art will appreciate that various changes, modifications, substitutions and variations may be made to the embodiments without departing from the principles and spirit of the present application, and that the scope of the present application is defined by the claims and their equivalents.

**Claims**

1. A vehicle control method, comprising:

   obtaining vehicle status information (S1);
   determining a target torque compensation control strategy according to the vehicle state information (S2), wherein the target torque compensation control strategy comprises one or both of a drive system yaw moment compensation control strategy, a brake system yaw moment compensation control strategy, and an active suspension roll compensation control strategy; and
   perfoming torque compensation for vehicle according to the target torque compensation control strategy (S3).

2. The vehicle control method according to claim 1, wherein that the vehicle state information comprises a steering wheel angle value and a vehicle lateral acceleration value,
   the determining of the target torque compensation control strategy according to the vehicle state information (s2) comprising:

   obtaining a vehicle roll angle value according to the vehicle lateral acceleration value and a first vehicle intrinsic parameter; and
   determining the target torque compensation control strategy according to the vehicle roll angle value and the steering wheel angle value.

3. The vehicle control method according to claim 2, wherein that the target torque compensation control strategy (S2) is determined according to the vehicle roll angle value and the steering wheel angle value comprises:

   if the steering wheel angle value is greater than or equal to a preset steering wheel angle threshold and the vehicle roll angle value is greater than or equal to a preset roll angle threshold, and a torque request signal is detected, the target torque compensation control strategy is a combination of a drive system yaw moment compensation control strategy and an active suspension roll compensation control strategy;

if the steering wheel angle value is greater than or equal to a preset steering wheel angle threshold and the vehicle roll angle value is greater than or equal to a preset roll angle threshold, and a braking signal is detected, the target torque compensation control strategy is a combination of a braking system yaw moment compensation control strategy and an active suspension roll compensation control strategy.

4. The vehicle control method according to any one of claims 1 to 3, further comprising:

   identifying a dynamic change scenario of the vehicle according to the vehicle state information (S4); and
   determining a target torque compensation control strategy according to the dynamic change scenario (S5).

5. The vehicle control method according to claim 4, wherein that the vehicle state information comprises a steering wheel angle value and a vehicle lateral acceleration value,
   that identifying a dynamic change scenario of the vehicle is identified according to the vehicle state information (S4) comprising:

   obtaining a vehicle roll angle value according to the vehicle lateral acceleration value and a first vehicle intrinsic parameter; and
   determing a dynamic change scenario of the vehicle according to the vehicle roll angle value and the steering wheel angle value.

6. The vehicle control method according to claim 5, wherein that determining the dynamic change scenario of the vehicle according to the vehicle roll angle value and the steering wheel angle value comprises:
   if the steering wheel angle value is greater than or equal to a preset steering wheel angle threshold and the vehicle roll angle value is greater than or equal to a preset roll angle threshold, the dynamic change scenario of the vehicle is determined to be a first scenario, and the first scenario is the dynamic change of the vehicle caused by the superposition of the steering wheel angle input and the vehicle's external environment.

7. The vehicle control method according to claim 6, wherein that the target torque compensation control strategy (S5) is determined according to the dynamically changing scenario comprises:

   determining the dynamic change scenario as the first scenario;
   if a torque request signal is detected, the target torque compensation control strategy is a combination of a drive system yaw moment compensation control strategy and an active suspension roll compensation control strategy;
   if a braking signal is detected, the target torque compensation control strategy is a braking system yaw moment compensation control strategy and an active suspension roll compensation control strategy.

8. The vehicle control method according to claim 3 or 7, wherein that the vehicle is subjected to torque compensation according to a combination of the drive system yaw moment compensation control strategy and the active suspension roll compensation control strategy comprises:

   obtaining the front and rear axle torques of the vehicle according to the yaw moment compensation control strategy of the drive system, and performing torque compensation on the front and rear axles of the vehicle according to the front and rear axle torques of the vehicle; and,
   obtaining a suspension driving current value according to the active suspension roll compensation control strategy, and controlling a vehicle suspension according to the suspension driving current value.

9. The vehicle control method according to claim 8, wherein obtaining the front and rear axle torques of the vehicle according to the yaw moment compensation control strategy of the drive system, comprises:

   obtaining total torque according to vehicle throttle depth and obtaining road adhesion coefficient and vehicle longitudinal acceleration;
   obtaining a rear axle torque distribution ratio of the vehicle according to the road adhesion coefficient, the vehicle longitudinal acceleration and a second vehicle intrinsic parameter;
   obtaining the front and rear axle torques of the vehicle according to the total torque and the rear axle torque distribution ratio.

10. The vehicle control method according to claim 3 or 7, wherein that the vehicle is subjected to torque compensation according to a combination of the braking system yaw moment compensation control strategy and the active suspension roll compensation control strategy comprises:

obtaining a yaw compensation torque according to the yaw moment compensation control strategy of the braking system, and performing torque compensation on the vehicle according to the yaw compensation torque; and, obtaining a suspension driving current value according to the active suspension roll compensation control strategy, and controlling a vehicle suspension according to the suspension driving current value.

11. The vehicle control method according to claim 10, wherein that the vehicle state information further comprises a yaw angular velocity value and a vehicle speed value, and that obtaining a yaw compensation torque according to the yaw moment compensation control strategy of the braking system comprises:

obtaining a yaw angular velocity deviation value according to the yaw angular velocity value; performing PID calculation according to the yaw angular velocity deviation value to obtain a yaw compensation torque; the proportional coefficient in the PID operation can be obtained by querying a mapping table of proportional gain and vehicle speed value according to the vehicle speed value.

12. The vehicle control method according to any one of claims 8 to 11, wherein that obtaining a suspension driving current value according to the active suspension roll compensation control strategy comprises:

obtaining a roll angle deviation value and a roll angle change rate according to the vehicle roll angle value; obtaining a suspension damping force according to the roll angle deviation value and the roll angle change rate; obtaining the suspension driving current value according to the suspension damping force.

13. The vehicle control method according to any one of claims 8 to 12, wherein that controlling a vehicle suspension according to the suspension driving current value comprises:
one or more of the suspension damping force, suspension height and suspension stiffness are controlled according to the suspension driving current value, where the control priority of the suspension damping force is higher than the control priority of the suspension height, and the control priority of the suspension height is higher than the control priority of the suspension stiffness.

14. The vehicle control method according to claim 2 or 3, wherein that determining the target torque compensation control strategy according to the vehicle roll angle value and the steering wheel angle value comprises:

if the steering wheel angle value is less than a preset steering wheel angle threshold and the vehicle roll angle value is greater than or equal to a preset roll angle threshold, determining that the target torque compensation control strategy is a drive system yaw torque compensation control strategy or a brake system yaw torque compensation control strategy; the vehicle state information also comprising a yaw rate value and a vehicle speed value, performing the torque compensation on the vehicle according to the target torque compensation control strategy (S3) comprising:

obtaining a yaw angular velocity deviation value according to the yaw angular velocity value; and performing a PID operation according to the yaw angular velocity deviation value to obtain a yaw compensation torque, wherein a mapping table of a proportional gain and a vehicle speed value is queried according to the vehicle speed value to obtain a proportional coefficient in the PID operation.

15. The vehicle control method according to any one of claims 5 to 7, wherein that determing a dynamic change scenario of the vehicle according to the vehicle roll angle value and the steering wheel angle value comprises:

if the steering wheel angle value is less than a preset steering wheel angle threshold value and the vehicle roll angle value is greater than or equal to a preset roll angle threshold value, determine that the dynamic change scenario of the vehicle is a second scenario, where the second scenario is a dynamic change of the vehicle caused by an external environment of the vehicle; the vehicle state information also comprises a yaw angular velocity value and a vehicle speed value, performing the torque compensation on the vehicle according to the target torque compensation control strategy (S3) comprising:

obtaining a yaw angular velocity deviation value according to the yaw angular velocity; and
performing a PID operation according to the yaw angular velocity deviation value to obtain a yaw compensation torque, where a mapping table of a proportional gain and a vehicle speed value is queried according to the vehicle speed value to obtain a proportional coefficient in the PID operation.

16. The vehicle control method according to claim 14 or 15, wherein that after obtaining the yaw compensation torque, the vehicle control method further comprises:

obtaining a third vehicle intrinsic parameter;
querying a mapping table of a third vehicle intrinsic parameter and a yaw compensation torque threshold value according to the third vehicle intrinsic parameter to obtain a corresponding yaw compensation torque threshold value; and
if the yaw compensation torque exceeds the yaw compensation torque threshold value, torque compensation is performed on the vehicle according to the yaw compensation torque threshold value.

17. A vehicle control device (10), comprising:

an information acquisition module (11), configured to acquire vehicle status information;
a control strategy determination module (13), configured to determine a target torque compensation control strategy according to the vehicle state information, wherein the target torque compensation control strategy comprises one or a both of the drive system yaw moment compensation control strategy, the brake system yaw moment compensation control strategy and the active suspension roll compensation control strategy; and
a control module (14), configured to perform torque compensation on the vehicle according to the target torque compensation control strategy.

18. A vehicle control device (10), comprising:

an information acquisition module (11), configured to acquire vehicle status information;
a scene recognition module (12), configured to recognize a dynamic change scenario of a vehicle according to the vehicle state information;
a control strategy determination module (13), configured to determine a target torque compensation control strategy according to the dynamic change scenario, wherein the target torque compensation control strategy comprises one or both of the drive system yaw moment compensation control strategy, the brake system yaw moment compensation control strategy and the active suspension roll compensation control strategy;
a control module (14), configured to perform torque compensation on the vehicle according to the target torque compensation control strategy.

19. A vehicle (100), comprising:

a drive system (20), a brake system (30) and a suspension system (40);
a domain controller (50), the domain controller (50) being connected to the drive system (20), the brake system (30) and the suspension system (40) to implement the vehicle control method according to any one of claims 1 to 16.

Obtain vehicle status information — S1

Determine a target torque compensation control strategy according to vehicle state information, where the target torque compensation control strategy includes one or both of a drive system yaw moment compensation control strategy, a brake system yaw moment compensation control strategy and an active suspension roll compensation control strategy — S2

Perform torque compensation on the vehicle according to the target torque compensation control strategy — S3

## FIG. 1

Obtain vehicle status information — S1

identifying the dynamic change scenario of the vehicle according to the vehicle state information — S4

Determine a target torque compensation control strategy according to vehicle state information, where the target torque compensation control strategy includes one or both of a drive system yaw moment compensation control strategy, a brake system yaw moment compensation control strategy and an active suspension roll compensation control strategy — S5

Perform torque compensation on the vehicle according to the target torque compensation control strategy — S3

## FIG. 2

FIG. 3

FIG. 4

FIG. 5

| Vehicle control device 10 | | | |
|---|---|---|---|
| Information acquisition module 11 | Scene recognition module 12 | Control strategy determination module 13 | Control module 14 |

FIG. 6

FIG. 7

Vehicle 100

Brake system 30

Drive system 20

Suspension system 40

Domain controller 50

## FIG. 8

## INTERNATIONAL SEARCH REPORT

| | International application No. |
|---|---|
| | **PCT/CN2024/082190** |

| A. | CLASSIFICATION OF SUBJECT MATTER |
|---|---|

B60W30/02(2012.01)i; B60W40/107(2012.01)i; B60W40/11(2012.01)i; B60W40/112(2012.01)i

According to International Patent Classification (IPC) or to both national classification and IPC

| B. | FIELDS SEARCHED |
|---|---|

Minimum documentation searched (classification system followed by classification symbols)

    IPC:B60W

Documentation searched other than minimum documentation to the extent that such documents are included in the fields searched

Electronic data base consulted during the international search (name of data base and, where practicable, search terms used)

    CNTXT: ENTXTC; WPABSC; VEN; ENTXT; CJFD: 转向, 转角, 横摆, 横摇, 侧倾, 俯仰, 力矩, 转矩, 补偿, 附加, 制动, 刹车, 减速, 悬架, steering, angle, yaw, roll+, pitch, torque, torsion, compensat+, brak+, decelerat+, suspension

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113085999 A (ZHEJIANG GEELY HOLDING GROUP CO., LTD. et al.) 09 July 2021 (2021-07-09)<br>    description, pages 5-16, and figures 1-11 | 1, 2, 4, 5, 17-19 |
| X | CN 110605975 A (BEIJING INSTITUTE OF TECHNOLOGY) 24 December 2019 (2019-12-24)<br>    description, pages 4-10 | 1, 2, 4, 5, 17-19 |
| A | CN 112172540 A (SHANGHAI UNIVERSITY OF ENGINEERING SCIENCE) 05 January 2021 (2021-01-05)<br>    entire document | 1-19 |
| A | KR 20130039046 A (HYUNDAI MOBIS CO., LTD.) 19 April 2013 (2013-04-19)<br>    entire document | 1-19 |
| A | KR 20080023010 A (MANDO CORP.) 12 March 2008 (2008-03-12)<br>    entire document | 1-19 |
| A | CN 108327702 A (DONGFENG MOTOR CORP.) 27 July 2018 (2018-07-27)<br>    entire document | 1-19 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 June 2024** | **30 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/082190** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 114954432 A (JIANGSU UNIVERSITY) 30 August 2022 (2022-08-30)<br>entire document | 1-19 |

Form PCT/ISA/210 (second sheet) (July 2022)

## INTERNATIONAL SEARCH REPORT
### Information on patent family members

International application No.

**PCT/CN2024/082190**

| Patent document cited in search report | | | Publication date (day/month/year) | Patent family member(s) | Publication date (day/month/year) |
|---|---|---|---|---|---|
| CN | 113085999 | A | 09 July 2021 | None | |
| CN | 110605975 | A | 24 December 2019 | None | |
| CN | 112172540 | A | 05 January 2021 | None | |
| KR | 20130039046 | A | 19 April 2013 | None | |
| KR | 20080023010 | A | 12 March 2008 | None | |
| CN | 108327702 | A | 27 July 2018 | None | |
| CN | 114954432 | A | 30 August 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310483290